# EUROPEAN PATENT APPLICATION

(11) **EP 4 156 598 A1**
(43) Date of publication of application: **29.03.2023**
(21) Application number: 21826727.6
(22) Date of filing: 31.05.2021
(51) Int. Cl.: H04L 9/32

(54) **CHALLENGE-RESPONSE PAIR GENERATION APPARATUS AND METHOD BASED ON PUF**

(30) Priority: 16.06.2020 CN 202010545895
(71) Applicant: Huawei Technologies Co., Ltd., Longgang District, Shenzhen, Guangdong 518129 (CN)
(72) Inventor: ZHOU, Peng, Suzhou, Jiangsu 215123 (CN); WU, Han, Suzhou, Jiangsu 215123 (CN); ZHANG, Jie, Suzhou, Jiangsu 215123 (CN)
(74) Representative: Isarpatent
(86) International application number: PCT/CN2021/097089
(87) International publication number: WO 2021/254129

(57) **Abstract**

This application provides an apparatus for generating a PUF-based challenge response pair. The apparatus includes: a first PUF module, configured to receive input challenge information, and generate first response information based on the input challenge information; a pseudorandom number generator, configured to generate P random number sequences based on the first response information; and a second PUF module, configured to obtain P pieces of second address information based on the P random number sequences, and generate P-bit second response information based on the P pieces of second address information, where P is a positive integer. According to the apparatus for generating a PUF-based challenge response pair in this application, on one hand, a random number sequence is used to select an address for the second PUF module to obtain final output response information, so that a quantity of challenge response pairs increases and correlation between adjacent response values of the final output response information decreases. On the other hand, the response information that is output by the first PUF module is used as the seed value of the pseudorandom number generator, to ensure unpredictability of the random number sequence generated by the pseudorandom number generator, thereby increasing unpredictability of the final output response information.

## Description

This application claims priority to Chinese Patent Application No. 202010545895.2, filed with the China National Intellectual Property Administration on June 16, 2020, and entitled "APPARATUS AND METHOD FOR GENERATING PUF-BASED CHALLENGE RESPONSE PAIR", which is incorporated herein by reference in its entirety.

### TECHNICAL FIELD

This application relates to the field of information security, and in particular, to an apparatus and a method for generating a PUF-based challenge response pair.

### BACKGROUND

Internet of Things (IoT) is a network that connects connected devices, vehicles, household appliances, and other objects such as embedded electronics, software, or sensors. Connectivity enables these objects to connect to each other and exchange data. At an early stage of development of the Internet of Things, a major concern is focused on basic theory and application research. However, with rapid development of the Internet of Things, an information security problem of the Internet of Things is of great concern. In security of the Internet of Things, key storage and device authentication are two key technologies. Core system security is the basis of security, and is one of important means for implementing privacy information protection. Identity authentication is the most direct defense technology and provides the most advanced defense for the Internet of Things security.

As a promising hardware security primitive, a physical unclonable function (PUF) is a quite good alternative solution for low-cost key generation and device verification. The PUF is a physical entity that generates, by using a physical structure characteristic of a circuit, an easy-to-evaluate but hard-to-predict key without requiring other expensive hardware. In addition, a PUF embedded device is easy to manufacture but hardly replicable in practice, even if an exact manufacturing process for producing the PUF device is mastered. A current PUF can be divided into a strong PUF and a weak PUF. The weak PUF provides only a small quantity of CRPs (challenge response pairs). The weak PUF can be used as a unique key of a conventional encryption system device or as a random seed of a conventional encryption system. However, for some application protocols with frequent interaction, it is expected that the PUF can provide as many challenge response pairs as possible. In this case, a quantity of challenge response pairs of the PUF cannot meet a requirement.

### SUMMARY

Embodiments of this application provide an apparatus and a method for generating a PUF-based challenge response pair. On one hand, a random number sequence generated by a pseudorandom number generator is used to select an address for a second PUF module to obtain final output response information, so that a quantity of challenge response pairs increases and correlation between adjacent response values of the final output response information decreases. On the other hand, response information that is output by a first PUF module is used as a seed value of the pseudorandom number generator, to ensure unpredictability of the random number sequence generated by the pseudorandom number generator, thereby increasing unpredictability of the final output response information.

According to a first aspect, this application provides an apparatus for generating a PUF-based challenge response pair. The apparatus includes a first PUF module, a pseudorandom number generator, and a second PUF module. The pseudorandom number generator is separately communicatively connected to the first PUF module and the second PUF module. The first PUF module receives input challenge information, and generates first response information based on the input challenge information. The first PUF module sends, to the pseudorandom number generator, the first response information generated by the first PUF module. The pseudorandom number generator uses the received first response information as a random number sequence generation seed value to generate P random number sequences, and the pseudorandom number generator sends the generated P random number sequences to the second PUF module. The second PUF module obtains P pieces of second address information based on the P random number sequences, and generates P-bit second response information based on the P pieces of second address information, where P is a positive integer. The second response information serves as the final output response information. The input challenge information and the second response information constitute a challenge response pair, and a trusted root for a security key/security authentication is generated based on the challenge response pair.

In a possible implementation, the pseudorandom number generator uses the first response information as the random number sequence generation seed value, and the pseudorandom number generator generates P random number sequences based on the random number sequence generation seed value.

In a possible implementation, the first response information generated by the first PUF module is M bits, and a random number sequence generated by the pseudorandom number generator is M bits, where M is a positive integer greater than or equal to 2.

In another possible implementation, the pseudorandom number generator is a linear feedback shift register.

In another possible implementation, the linear feedback shift register includes a shift register and a feedback function.

In another possible implementation, the random number sequence is an M-bit random number sequence, and row information and column information of an address unit of the second PUF module are determined based on the M-bit random number sequence, where M is a positive integer greater than or equal to 2.

In an example, a first M1-bit random number sequence in the M-bit random number sequence is used to select a row of the address unit of the second PUF module, and a last M2-bit random number sequence in the M-bit random number sequence is used to select a column of the address unit of the second PUF module, where M=M1+M2, and both M1 and M2 are positive integers. For example, when M is 25, the first 20 bits of a 25-bit random number sequence are used to select a row of the address unit of the second PUF module, and the last 5 bits are used to select a column of the address unit of the second PUF module. In this way, an address unit is selected, so that a value stored in the selected address unit can be further generated.

In another possible implementation, the input challenge information is first address information. The first PUF module obtains a start address unit based on the first address information, determines consecutive address units based on the start address unit, and generates first response information based on the consecutive address units. The first response value is a first number sequence formed by values stored in the consecutive address units.

It should be explained herein that the consecutive address units are adjacent address units in a row of the address unit of the first PUF module. If the first PUF module generates a 25-bit response value, the consecutive address units are 25 consecutive address units.

That the first PUF module obtains the consecutive address units based on the start address unit includes: using the start address unit as a first address unit (including the start address unit), to obtain a second address unit adjacent to the first address unit, a third address unit adjacent to the second address unit, ..., and an n^{th} address unit, where the first address unit, the second address unit, ..., and the n^{th} address unit are consecutive address units obtained based on the start address unit, and n is a positive integer less than or equal to a quantity of address units of the first PUF module,
or, determining a row of the address unit of the first PUF module based on the start address unit, and using, as a first address unit, an address spaced from the start address unit by a address units, to obtain a second address unit adjacent to the first address unit, a third address unit adjacent to the second address unit, ..., and an n^{th} address unit, where n is a positive integer less than or equal to a quantity of address units of the first PUF module minus a.

Further, values stored in the consecutive address units are obtained, and that the values constitute the first response value includes: values stored in the consecutive address units that are the first address unit, the second address unit, ..., and the n^{th} address unit, that is, a value stored in the first address unit is b1, a value stored in the second address unit is b2, ..., and a value stored in the n^{th} address unit is bn. Therefore, the first response value is a number sequence of b1, b2, ..., and bn.

In another possible implementation, the second PUF module determines P address units based on the P pieces of second address information, and generates P-bit second response information based on the P address units. The second response information is a P-bit second number sequence formed by P values stored in address units corresponding to the P pieces of second address information.

That the second response information is a P-bit second number sequence formed by P values stored in address units corresponding to the P pieces of second address information includes: The second PUF module successively determines P pieces of address information based on received P random number sequences, and selects P address units based on the P pieces of address information, thereby obtaining P values stored in the P address units, where the P values form a P-bit second response value, and sorting of the P values is determined based on an order of receiving the P random number sequences. For example, the second PUF module successively receives random number sequences P1, P2, P3, ..., and Pn. The second PUF module selects an address unit based on the received random number sequence of P1, where a value stored in the address unit is c 1. The second PUF module selects an address unit based on the received random number sequence of P2, where a value stored in the address unit is c2. The second PUF module selects an address unit based on the received random number sequence of P3, where a value stored in the address unit is c3. By analogy, the second PUF module selects an address unit based on the received random number sequence of Pn, where a value stored in the address unit is cn. Therefore, the second response value is a number sequence of c1, c2, ..., and cn.

Optionally, values stored in address units of the first PUF module and the second PUF module are 0 or 1.

According to a second aspect, this application provides a method for generating a PUF-based challenge response pair, including: sending input challenge information to a first PUF module, where the first PUF module is configured to generate first response information based on the input challenge information; sending the first response information to a pseudorandom number generator, where the pseudorandom number generator is configured to generate P random number sequences based on the first response information; and sending the P random number sequences to a second PUF module, where the second PUF module is configured to obtain P pieces of second address information based on the P random number sequences, and generate P-bit second response information based on the P pieces of second address information, and P is a positive integer.

In another possible implementation, that the pseudorandom number generator generates P random number sequences based on the first response information includes: The pseudorandom number generator uses the first response information as a random number sequence generation seed value, and the pseudorandom number generator generates P random number sequences based on the random number sequence generation seed value.

In another possible implementation, the first response information generated by the first PUF module is M bits, and a random number sequence generated by the pseudorandom number generator is M bits, where M is a positive integer greater than or equal to 2.

In another possible implementation, that the second PUF module is configured to obtain P pieces of second address information based on the P random number sequences includes: The random number sequence is an M-bit random number sequence, and row information and column information of an address unit of the second PUF module are determined based on the M-bit random number sequence, where M is a positive integer greater than or equal to 2.

In an example, that the second PUF module generates P-bit second response information based on the P pieces of second address information includes: The second address information is an M-bit random number sequence, a first M1-bit random number sequence in the M-bit random number sequence is used to select a row of the address unit of the second PUF module, and a last M2-bit random number sequence in the M-bit random number sequence is used to select a column of the address unit of the second PUF module, where M=M1+M2, and both M1 and M2 are positive integers.

In another possible implementation, that the sending input challenge information to a first PUF module, where the first PUF module is configured to generate first response information based on the input challenge information includes: The input challenge information is first address information, and the first PUF module obtains a start address unit based on the first address information, determines consecutive address units based on the start address unit, and generates first response information based on the consecutive address units, where the first response value is a first number sequence formed by values stored in the consecutive address units. In another possible implementation, that the second PUF module generates P-bit second response information based on the P pieces of second address information includes: The second PUF module determines P address units based on the P pieces of second address information, and generates P-bit second response information based on the P address units, where the second response information is a P-bit second number sequence formed by P values stored in address units corresponding to the P pieces of second address information.

This application provides an apparatus and a method for generating a PUF-based challenge response pair. On the one hand, a random number sequence generated by the pseudorandom number generator is used to select an address for the second PUF module to obtain final output response information, so that a quantity of challenge response pairs increases and correlation between adjacent values of the final output response information decreases. On the other hand, response information that is output by the first PUF module is used as a seed value of the pseudorandom number generator to ensure unpredictability of the random number sequence generated by the random number generator, thereby increasing unpredictability of the final output response information.

### BRIEF DESCRIPTION OF DRAWINGS

FIG. 1 is a schematic diagram of working of a PUF structure;
FIG. 2 is a schematic diagram of a structure of an apparatus for generating a challenge response pair of an SRAM PUF;
FIG. 3 is a schematic diagram of a structure of an apparatus for generating a PUF-based challenge response pair according to an embodiment of this application;
FIG. 4 is a schematic diagram of a structure of an SRAM PUF module 11 of an apparatus for generating a PUF-based challenge response pair according to an embodiment of this application;
FIG. 5 is a schematic diagram of a structure of a random number generator of an apparatus for generating a PUF-based challenge response pair according to an embodiment of this application;
FIG. 6 is a schematic diagram of a structure of an SRAM PUF module 13 of an apparatus for generating a PUF-based challenge response pair according to an embodiment of this application;
FIG. 7 is a schematic diagram of selecting an address when a random number sequence is 25 bits according to an embodiment of this application;
FIG. 8 is a schematic diagram of a structure of an address unit of an SRAM PUF module 11 when a quantity of response bits of the SRAM PUF module 11 is 25 bits according to an embodiment of this application; and
FIG. 9 is a schematic diagram of an application scenario of an apparatus for generating a PUF-based challenge response pair according to an embodiment of this application.

### DESCRIPTION OF EMBODIMENTS

The technical solutions of this application are further described in detail with reference to accompanying drawings and embodiments as follows.

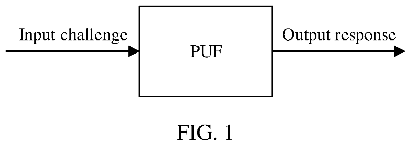

Due to complexity and randomness of a process, a PUF (physically unclonable function) structure cannot be replicated to obtain another copy from a perspective of engineering practice. As shown in FIG. 1, input-output of the PUF has a function mapping relationship (Function). When a user gives an input challenge to the PUF, the PUF device can generate an output response, and the output response is random, unpredictable, and cannot be replicated. Such a pair of input-output relationships is referred to as a challenge-response pair (CRP). From this perspective, the PUF may be considered as a physical implementation of a mathematical one-way function.

A PUF solution that is currently obtained and that is for large-scale application is basically based on an SRAM structure. Therefore, an SRAM PUF is used as an example to explain an apparatus and a method for generating a PUF-based challenge response pair.

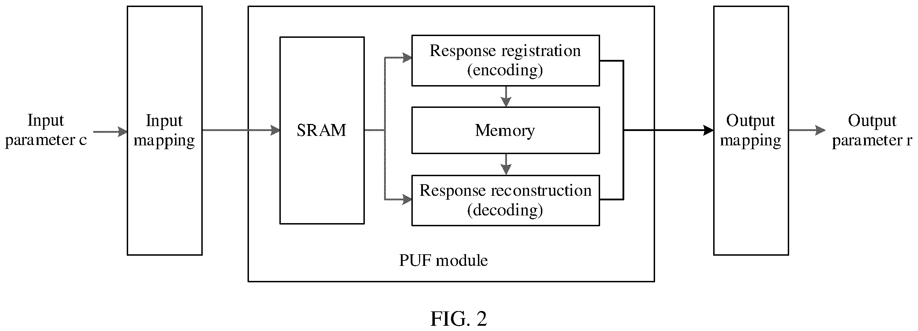

FIG. 2 is a schematic diagram of a structure of an apparatus for generating a challenge response pair of an SRAM PUF. A structure is a single-stage SRAM PUF structure. However, the SRAM PUF is a weak PUF, and a quantity of challenge response pairs of the SRAM PUF is relatively small. For some application protocols with frequent interaction, it is expected that the PUF module can provide as many challenge response pairs as possible. In this case, the quantity of challenge response pairs of the SRAM PUF cannot meet a requirement.

The apparatus includes a registration mode and a reconstruction mode. The registration mode includes: recording an original challenge response pair (it should be explained that the original challenge response pair herein is a response value of start address information-consecutive address units), encoding the original challenge response pair to generate auxiliary data, and storing the auxiliary data in a memory. The reconstruction mode includes: decoding the auxiliary data to obtain a recorded original challenge response pair, and generating an output response consistent with an output response of the registration when the input challenge is received.

### A specific working process is as follows:

After being mapped by an input mapping function, an input parameter c acts on the SRAM PUF module to determine whether auxiliary data corresponding to a mapped input parameter c exists in the memory. If the auxiliary data does not exist, a response is registered. Otherwise, the response is reconstructed. The obtained response passes through an output mapping function to obtain a parameter r. The parameter c-parameter r is a challenge response pair.

The foregoing apparatus for generating a challenge response pair of an SRAM PUF maps an input challenge into one piece of start address information through a common mapping function. Values stored in consecutive address units are used as responses. In this manner, a correspondence between a challenge and a response is regular, and security of correlation between adjacent address units is also reduced.

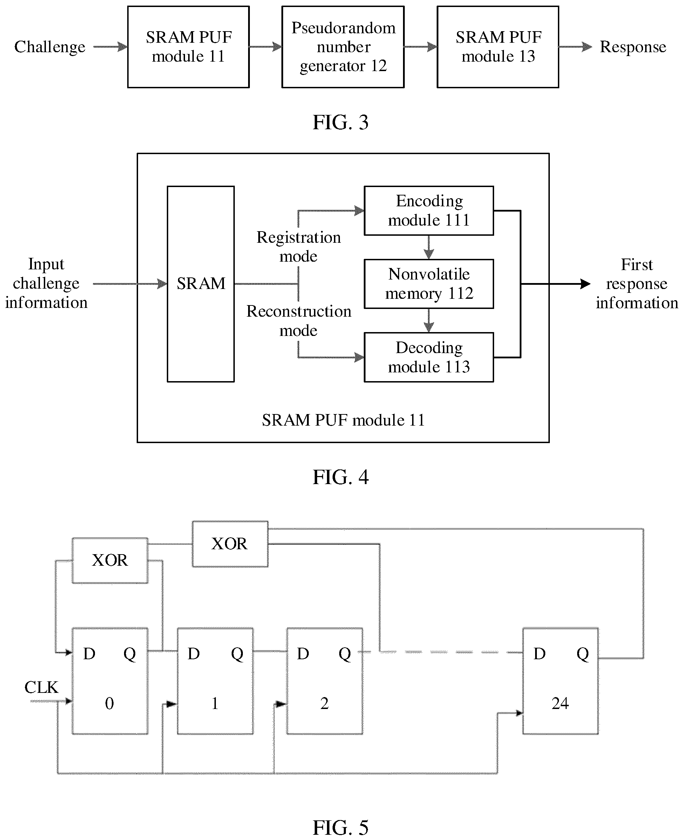

An embodiment of this application provides an apparatus for generating a PUF-based challenge response pair. As shown in FIG. 3, the apparatus includes: an SRAM PUF module 11 (that is, a first PUF module), a pseudorandom number generator 12, and an SRAM PUF module 13 (that is, a second PUF module). The pseudorandom number generator 12 is separately communicatively connected to the SRAM PUF module 11 and the SRAM PUF module 13. A specific working procedure is as follows:

First, the SRAM PUF module 11 receives input challenge information, and generates M-bit first response information based on the input challenge information. The SRAM PUF module 11 sends, to the pseudorandom number generator 12, the first response information generated by the SRAM PUF module 11.

Then, the pseudorandom number generator 12 uses the received first response information as a random number sequence generation seed value to generate P M-bit random number sequences, and the pseudorandom number generator 12 sends the generated P M-bit random number sequences to the SRAM PUF module 13.

Finally, the SRAM PUF module 13 uses the received P M-bit random number sequences as address information of the SRAM PUF module 13. The SRAM PUF module 13 generates P-bit second response information based on the address information. The second response information is output as final output response information.

Therefore, the input challenge information and the second response information constitute a challenge response pair of the apparatus for generating a PUF-based challenge response pair.

The apparatus for generating a PUF-based challenge response pair in this embodiment of this application uses P random number sequences generated by the random number generator to select an address for an address unit of the SRAM PUF module. Each random number sequence is used to select a value stored in an address unit corresponding to the SRAM PUF module. P random number sequences are used to select P values, and a P-bit response value formed by the P values is a P-bit response value that is finally output. An output response value of the apparatus for generating a challenge response pair of the single-stage SRAM PUF structure is formed by values stored in the consecutive address units, and the consecutive address units are obtained by using start address information obtained by mapping the input challenge through the input mapping function. For example, a start address unit determines a row of the address unit of the SRAM PUF module. The start address unit is used as a first address unit (including the start address unit). A second address unit adjacent to the first address unit, a third address unit adjacent to the second address unit, ..., and an n^{th} address unit are obtained, where n is a positive integer less than or equal to a quantity of columns of the address unit of the first PUF module. When the P-bit response value is generated, the SRAM PUF module needs to have at least P consecutive address units, and then at least a P-bit response address unit is needed. However, the apparatus for generating a PUF-based challenge response pair in this embodiment of this application may also generate the P-bit response value without requiring the P-bit response address unit. Therefore, when a response value of a same quantity of bits is generated, the apparatus for generating a PUF-based challenge response pair in this embodiment of this application needs a smaller response address unit.

For example, if a 25-bit response value is generated, a response address unit of the apparatus for generating a challenge response pair of the single-stage SRAM PUF structure needs to have at least 25 consecutive address units. Therefore, a size of the response address unit is at least 25 bits. According to the apparatus for generating a PUF-based challenge response pair in this embodiment of this application, the pseudorandom number generator 12 needs to generate 25 random number sequences, and select an address for the response address unit to generate a 25-bit response value. Theoretically, response space only needs to be greater than 1 bit to generate the 25-bit response value. Therefore, when a response value of a same quantity of bits is generated, the apparatus for generating a PUF-based challenge response pair in this embodiment of this application needs a smaller response address unit.

In addition, the SRAM PUF module 13 of the apparatus for generating a PUF-based challenge response pair in this embodiment of this application uses, as address information, a random number sequence generated by the pseudorandom number generator, to select an address to generate response information. This resolves a problem of correlation between adjacent address units, and improves security of a challenge response pair generated by the entire apparatus.

In addition, response information generated by the physical unclonable function (the SRAM PUF module 11) is used as a random number sequence generation seed value of the pseudorandom number generator. Because of an unclonable characteristic of the physical unclonable function, and randomness and unpredictability of output, security of the random number sequence generation seed value is ensured.

As shown in FIG. 4, the SRAM PUF module 11 of the apparatus for generating a PUF-based challenge response pair in this embodiment of this application includes an encoding module 111, a nonvolatile memory 112, and a decoding module 113. The SRAM PUF module 11 includes a registration mode and a response mode. The registration mode includes: recording original challenge response pair information (that is, a response value of start address information-consecutive address units), encoding the information by using the encoding module 111 to generate first auxiliary data, and saving the first auxiliary data to the nonvolatile memory 112. The reconstruction mode includes: using the reconstruction mode each time the SRAM PUF module 11 is energized again after the registration, and using the first auxiliary data and the decoding module 113 to enable a response obtained each time to be consistent with a response obtained during the registration. It should be noted that the apparatus for generating a PUF-based challenge response pair in this embodiment of this application imposes no limitation on encoding and decoding methods of the encoding module 111 and the decoding module 113, provided that the encoding module can encode the original challenge response pair information to generate the computer recognizable first auxiliary data that is easily stored, and the decoding module can decode the first auxiliary data into the original challenge response pair.

### A working process is as follows:

The SRAM PUF module 11 receives first address information (that is, input challenge information), and determines whether auxiliary data corresponding to the first address information exists in the nonvolatile memory 112. If the auxiliary data does not exist, an M-bit first response value of the consecutive address units that use the first address information as a start address is registered and output by using the registration mode. If the auxiliary data exists, an M-bit first response value of the consecutive address units that use the first address information as a start address is output by using the reconstruction mode. The M-bit first response value is the first response information. The first response information is sent to the pseudorandom number generator 12 as the random number sequence generation seed value of the pseudorandom number generator 12. Because the SRAM PUF module 11 has physical non-clonality, uniqueness, and unpredictability, an unpredictable random number seed may be directly obtained by using a challenge response pair, thereby ensuring that the pseudorandom number generator 12 generates a secure and reliable random number sequence.

It should be noted herein that the SRAM PUF module 11 may set the input mapping function, and map the input challenge information into the first address information through the mapping function, or may not set the input mapping function, and the input challenge information is directly the first address information.

The pseudorandom number generator 12 of the apparatus for generating a PUF-based challenge response pair in this embodiment of this application uses the first response information as the random number sequence generation seed value, and the pseudorandom number generator 12 generates P M-bit random number sequences based on the random number sequence generation seed value.

Specifically, the pseudorandom number generator 12 is a linear feedback shift register (as shown in FIG. 5), and includes a shift register and a feedback function. The shift register is a bit sequence, and data is stored in each bit of the bit sequence. Each time new data is generated, data of all bits in the shift register is shifted by one bit to the right, and removed data is output of the shift register. An empty leftmost bit is used to store the new data. The new data is obtained by performing calculation on all other bits through the feedback function, where the feedback function is a linear function. In an example, an algorithm feature polynomial of the linear feedback shift register is f(x)=x25+x3+ 1. A random number sequence generated by the linear feedback shift register of the apparatus for generating a PUF-based challenge response pair in this embodiment of this application has been proved to be of good randomness. A meaning of pseudorandom is that a same random number sequence is generated only if a seed value is fixed. Therefore, the challenge and the response are in a one-to-one correspondence.

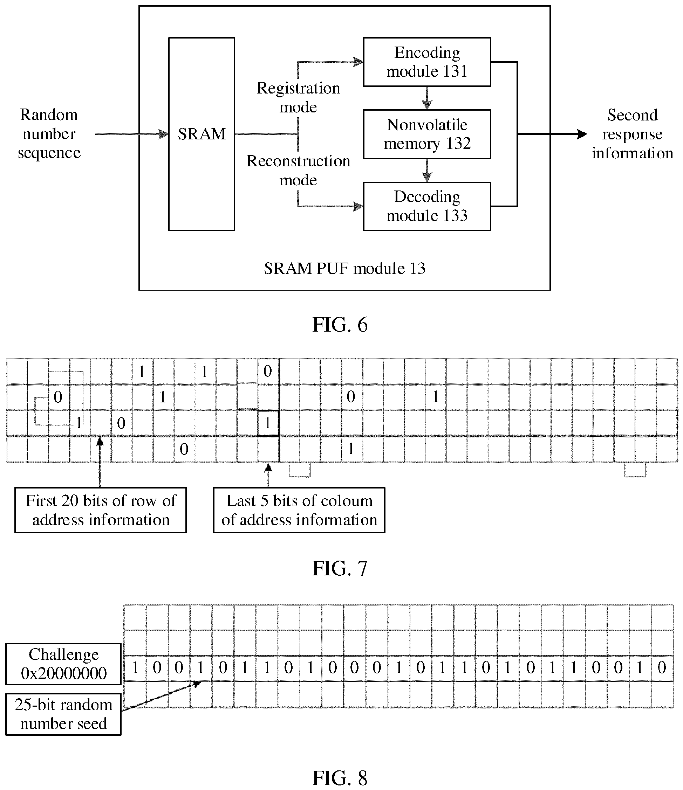

As shown in FIG. 6, the SRAM PUF module 13 of the apparatus for generating a PUF-based challenge response pair in this embodiment of this application includes an encoding module 131, a nonvolatile memory 132, and a decoding module 133. The SRAM PUF module 13 includes a registration mode and a response mode. The registration mode includes: recording a random number sequence and response value information, encoding the random number sequence and the response value information by using the encoding module 131 to generate second auxiliary data, and saving the second auxiliary data to the nonvolatile memory 132. The reconstruction mode includes: using the reconstruction mode each time the SRAM PUF module 13 is energized again after the registration, and using the second auxiliary data and the decoding module 133 to enable a response obtained each time to be consistent with a response obtained during the registration.

### A working process is as follows:

The SRAM PUF module 13 receives P random number sequences generated by the pseudorandom number generator, determines whether auxiliary data corresponding to the random number sequence exists in the nonvolatile memory 132. If the auxiliary data does not exist, a P-bit response value is registered and output by using the registration mode. If the auxiliary data exists, a P-bit response value is output by using the reconstruction mode. The output P-bit response value may be directly output as final P-bit response information or mapped into final response information through the output mapping function.

The following describes a specific solution in which the SRAM PUF module 13 uses a received M-bit random number sequence as address information to select an address.

The SRAM PUF module 13 determines row information and column information of the address unit of the SRAM PUF module 13 based on the M-bit random number sequence. Address information of the address unit of the SRAM PUF module 13 may be determined and obtained based on the row information and column information, thereby selecting the address unit.

In an example, the SRAM PUF module 13 uses a first M1-bit random number sequence in the M-bit random number sequence to select a row of the address unit of the SRAM PUF module 13, and uses a last M2-bit random number sequence in the M-bit random number sequence to select a column of the address unit of the SRAM PUF module 13, where M=M1+M2.

As shown in FIG. 7, when a random number sequence is 25 bits, the first 20 bits of the random number sequence are used to select a row of the address unit of the SRAM PUF module 13, and the last 5 bits are used to select a column of the address unit of the SRAM PUF module 13, that is, an address unit of the SRAM PUF module is selected, so that a value stored in the address unit can be obtained.

Certainly, the SRAM PUF module 13 determines the row information and column information of the address unit of the second PUF module based on the M-bit random number sequence. This is not limited to the method in the foregoing example. Another preset rule may alternatively determine the row information and column information of the address unit of the second PUF module based on the M-bit random number sequence.

It should be explained that values stored in the address units that are of the SRAM PUF module 11 and the SRAM PUF module 13 are 0 or 1. Both the first response information generated by the SRAM PUF module 11 and the second response information generated by the SRAM PUF module 13 are number sequences formed by 0 and 1.

The apparatus for generating a PUF-based challenge response pair in this embodiment of this application selects address information of the SRAM PUF module 13 based on P random number sequences generated by the pseudorandom number generator 12. Each random number sequence is used to select a response value of the address unit of the SRAM PUF module 13. The P random number sequences are used to select values of P address units of the SRAM PUF module, and then a P-bit response value is output, where the P-bit response value is final output response information. Compared with response information that is output by the existing PUF structure, that is, response information is values that are of the consecutive address units and that are output when an input challenge is mapped into a start address, response information that is output by the apparatus for generating a PUF-based challenge response pair in this embodiment of this application overcomes correlation between adjacent values, so that response information that is finally output is more secure and reliable.

A quantity of final output response bits of the apparatus for generating a PUF-based challenge response pair in this embodiment of this application mainly depends on a quantity of random number sequences generated by the pseudorandom number generator 12. The P random number sequences are used to select values of P response address units as a P-bit output response, and an output response generated by the current PUF structure is values stored in the consecutive address units of the start address. It can be learned that a quantity of output response bits of the current PUF structure depends on a size of the response address unit of the PUF structure. However, a quantity of output response bits of the apparatus for generating a PUF-based challenge response pair in this embodiment of this application mainly depends on a quantity of random numbers, and is not limited by the size of the response address unit. Therefore, when a same quantity of output response bits is generated, a response address unit of the apparatus for generating a PUF-based challenge response pair in this embodiment of this application is smaller than a response address unit of the current PUF structure, thereby saving more PUF address unit resources.

For example, assuming that a key length is 256 bits, 225 keys need to be generated, where the key length depends on a quantity of output response bits, and a quantity of keys depends on a quantity of challenge response pairs. An apparatus for generating a challenge response pair of the SRAM PUF of the single-stage SRAM PUF structure needs to meet a response address unit of 256 bits, and a quantity of generated challenge response pairs is 225. Therefore, SRAM PUF space required by the apparatus is 225*256 bits.

A quantity of challenge response pairs of the apparatus for generating a PUF-based challenge response pair in this embodiment of this application depends on a quantity of random number seeds, that is, depends on a quantity of challenge response pairs of the SRAM PUF module 11. To generate 225 keys, the SRAM PUF module 11 needs to generate 225 challenge response pairs. To generate the 225 challenge response pairs, response space of the SRAM PUF module 11 needs to be 25 bits (as shown in FIG. 8). Therefore, an address unit of the SRAM PUF module 11 is 225*25 bits. To generate a key length of 256 bits, a 256-bit output response needs to be generated. To generate the 256-bit output response, the pseudorandom number generator 12 needs to generate 256 random number sequences. Therefore, the SRAM PUF module 13 only needs to meet 25-bit random number sequence address space. The 25-bit random number sequence is used to select an address for the response address unit of the SRAM PUF module 13. A first 20-bit random number sequence is used to select a row of the response address unit, and the last 5 bits are used to select a column of the response address unit. Therefore, if the address unit of the SRAM PUF module 13 is 220*32 bits, a 256-bit output response can be generated. If the address unit of the SRAM PUF module 11 is 225*25 bits and the address unit of the SRAM PUF module 13 is 220*32 bits, 225 keys each with a length of 256 bits can be generated. Compared with the apparatus for generating a challenge response pair of the SRAM PUF of the single-stage SRAM PUF structure, the apparatus for generating a PUF-based challenge response pair in this embodiment of this application requires only approximately one tenth of resources. Therefore, the apparatus for generating a PUF-based challenge response pair in this embodiment of this application saves more space on the basis of generation of a same quantity of challenge response pairs.

In addition, a quantity of response bits of the SRAM PUF module, a quantity of random number bits, and a space size of the SRAM PUF module 13 can be designed according to a requirement, thereby achieving higher security and a larger quantity of keys. For example, if a 35-bit random number is used to select an address for a 1G response PUF, a maximum of 2^35 challenge response pairs can be ideally generated.

In addition, the apparatus for generating a challenge response pair of the SRAM PUF of the single-stage SRAM PUF structure maps a challenge to a specific address through a mathematical function, thereby obtaining values stored in a segment of consecutive address units as a response. All chips use a fixed mapping function. As long as the challenge response pair is cracked once, an address unit to be addressed can be predicted by using the challenge, thereby reducing unpredictability of the entire module.

The apparatus for generating a PUF-based challenge response pair in this embodiment of this application performs mapping by using the SRAM PUF module 11, to enhance non-replicability of a random source. The challenge is mapped into a random number seed based on unpredictability of the challenge response pair of the SRAM PUF module 11. The SRAM PUF module 11 performs mapping by using different challenge response pairs, so that some challenge response pairs cannot be cracked and therefore a mapping relationship cannot be cracked. Even if challenge response pairs of one SRAM PUF module 11 are exhausted, a mapping relationship of another SRAM PUF module 11 cannot be obtained.

A response corresponding to a challenge of a solution of the apparatus for generating a challenge response pair of a single-stage SRAM PUF structure is values stored in a segment of consecutive address units. However, the apparatus for generating a PUF-based challenge response pair in this embodiment of this application uses the pseudorandom number generator 12 to generate 256 random number sequences based on a 25-bit response (that is, a random number seed) generated by the SRAM PUF module 11. The 256 random number sequences are used as address selection data to select, as a response, values stored in 256 address units from the SRAM PUF module 13. The SRAM PUF module 13 obtains a corresponding randomly distributed 256-bit response value from the SRAM PUF module 13 of 1M words based on the 256 random number sequences. This overcomes a disadvantage that the consecutive address units have correlation, and can further increase a quantity of challenge response pairs.

The apparatus for generating a PUF-based challenge response pair in this embodiment of this application may be used for device authentication of the Internet of Things or Internet of Vehicles.

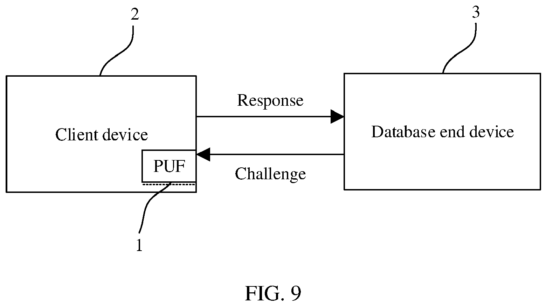

As shown in FIG. 9, the Internet of Things system includes a client device 2 (including a vehicle, a household appliance, and other embedded electronics, software, sensors, camera devices and the like) and a database end device (a server for storing data). An apparatus 1 for generating a PUF-based challenge response pair is disposed on the client device. The client device 2 and the database end device 3 can be interconnected to perform data transmission only after authentication succeeds. The database end device 3 pre-stores all challenge response pairs of the apparatus 1 for generating a PUF-based challenge response pair. When authentication needs to be performed, the database end device 3 selects a challenge and sends the challenge to the client device 2. The client device 2 obtains, based on the challenge, a corresponding response from the apparatus 1 for generating a PUF-based challenge response pair, and returns the response to the database end device 3. The database end device 3 compares the obtained response with a locally stored challenge response. If the two responses are consistent, the authentication succeeds; otherwise, the authentication fails.

The apparatus for generating a PUF-based challenge response pair in this embodiment of this application may be further applied to key generation.

For example, by using randomness and unpredictability of a challenge response pair generated by the apparatus for generating a PUF-based challenge response pair, the apparatus for generating a PUF-based challenge response pair is challenged to generate several challenge response pairs. The challenge response pair generated by the apparatus is taken as a key. When the apparatus for generating a PUF-based challenge response pair is powered on, a key is generated, and when the apparatus for generating a PUF-based challenge response pair is powered off, the key disappears. Therefore, this key generation method does not need the PRNG compared with the conventional technology, and randomness may be provided by the device. In addition, protected nonvolatile storage space is not needed, either. A same key may be regenerated as required based on a device random fingerprint (a challenge response pair).

A person of ordinary skill in the art may be aware that, in combination with the examples described in embodiments disclosed in this specification, units and algorithm steps may be implemented by electronic hardware, computer software, or a combination thereof. To clearly describe interchangeability between the hardware and the software, the foregoing has generally described compositions and steps of each example according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

Steps of methods or algorithms described in embodiments disclosed in this specification may be implemented by hardware, a software module executed by a processor, or a combination thereof. The software module may be configured in a random access memory (RAM), a memory, a read-only memory (ROM), an electrically programmable ROM, an electrically erasable programmable ROM, a register, a hard disk, a removable disk, a CD-ROM, or a storage medium in any other forms well-known in the art.

In the foregoing specific implementations, the objective, technical solutions, and benefits of this application are further described in detail. It should be understood that the foregoing descriptions are merely specific implementations of this application, but are not intended to limit the protection scope of this application. Any modification, equivalent replacement, or improvement made without departing from the principle of this application should fall within the protection scope of this application.

## Claims

1. An apparatus for generating a PUF-based challenge response pair, comprising:
a first PUF module, configured to receive input challenge information, and generate first response information based on the input challenge information;
a pseudorandom number generator, configured to generate P random number sequences based on the first response information; and
a second PUF module, configured to: obtain P pieces of second address information based on the P random number sequences, and generate P-bit second response information based on the P pieces of second address information, wherein P is a positive integer.

2. The apparatus for generating a PUF-based challenge response pair according to claim 1, wherein the pseudorandom number generator uses the first response information as a random number sequence generation seed value, and the pseudorandom number generator generates P random number sequences based on the random number sequence generation seed value.

3. The apparatus for generating a PUF-based challenge response pair according to claim 1, wherein the first response information generated by the first PUF module is M bits, and a random number sequence generated by the pseudorandom number generator is M bits, wherein M is a positive integer greater than or equal to 2.

4. The apparatus for generating a PUF-based challenge response pair according to claim 2, wherein the pseudorandom number generator is a linear feedback shift register.

5. The apparatus for generating a PUF-based challenge response pair according to claim 4, wherein the linear feedback shift register comprises a shift register and a feedback function.

6. The apparatus for generating a PUF-based challenge response pair according to any one of claims 1 to 5, wherein the random number sequence is an M-bit random number sequence, and row information and column information of an address unit of the second PUF module are determined based on the M-bit random number sequence, wherein M is a positive integer greater than or equal to 2.

7. The apparatus for generating a PUF-based challenge response pair according to any one of claims 1 to 6, wherein the input challenge information is first address information; and the first PUF module obtains a start address unit based on the first address information, determines consecutive address units based on the start address unit, and generates first response information based on the consecutive address units, wherein the first response information is a first number sequence formed by values stored in the consecutive address units.

8. The apparatus for generating a PUF-based challenge response pair according to any one of claims 1 to 7, wherein the second PUF module determines P address units based on the P pieces of second address information, and generates P-bit second response information based on the P address units; and the second response information is a P-bit second number sequence formed by P values stored in address units corresponding to the P pieces of second address information.

9. A method for generating a PUF-based challenge response pair, comprising:
sending input challenge information to a first PUF module, wherein the first PUF module is configured to generate first response information based on the input challenge information;
sending the first response information to a pseudorandom number generator, wherein the pseudorandom number generator is configured to generate P random number sequences based on the first response information; and
sending the P random number sequences to a second PUF module, wherein the second PUF module is configured to obtain P pieces of second address information based on the P random number sequences, and generate P-bit second response information based on the P pieces of second address information, wherein P is a positive integer.

10. The method according to claim 9, that the pseudorandom number generator generates P random number sequences based on the first response information comprises:
using, by the pseudorandom number generator, the first response information as a random number sequence generation seed value, and generating P random number sequences based on the random number sequence generation seed value.

11. The method according to claim 9, wherein the first response information generated by the first PUF module is M bits, and a random number sequence generated by the pseudorandom number generator is M bits, wherein M is a positive integer greater than or equal to 2.

12. The method according to any one of claims 9 to 11, wherein that the second PUF module obtains P pieces of second address information based on the P random number sequences comprises:
the random number sequence is an M-bit random number sequence, and row information and column information of an address unit of the second PUF module are determined based on the M-bit random number sequence, wherein M is a positive integer greater than or equal to 2.

13. The method according to any one of claims 9 to 12, wherein the sending input challenge information to a first PUF module, wherein the first PUF module is configured to generate first response information based on the input challenge information comprises:
the input challenge information is first address information; and the first PUF module obtains a start address unit based on the first address information, determines consecutive address units based on the start address unit, and generates first response information based on the consecutive address units, wherein the first response information is a first number sequence formed by values stored in the consecutive address units.

14. The method according to any one of claims 9 to 13, wherein that the second PUF module generates P-bit second response information based on the P pieces of second address information comprises:
determining, by the second PUF module, P address units based on the P pieces of second address information, and generating P-bit second response information based on the P address units, wherein the second response information is a P-bit second number sequence formed by P values stored in address units corresponding to the P pieces of second address information.
